# EUROPEAN PATENT SPECIFICATION

(11) **EP 3 860 121 B1**
(45) Date of publication and mention of the grant of the patent: **11.09.2024**
(21) Application number: 19864913.9
(22) Date of filing: 11.03.2019
(51) Int. Cl.: H04N 17/00, H04N 21/2187, H04N 21/8352, H04N 21/61

(54) **VIDEO SERVICE QUALITY ASSESSMENT METHOD AND APPARATUS**
VERFAHREN UND VORRICHTUNG FÜR DIE BEWERTUNG DES VIDEOSERVICES
PROCÉDÉ ET DISPOSITIF D'ÉVALUATION DE QUALITÉ DE SERVICE VIDÉO

(30) Priority: 27.09.2018 CN 201811133585
(43) Date of publication of application: 04.08.2021
(73) Proprietor: ZTE Corporation, Shenzhen, Guangdong 518057 (CN)
(72) Inventor: JIANG, Chunhe, Shenzhen, Guangdong 518057 (CN)
(74) Representative: Regimbeau
(86) International application number: PCT/CN2019/077646
(87) International publication number: WO 2020/062789

(56) References cited:
- EP-A1- 2 439 953
- EP-A2- 2 480 001
- CN-A- 103 138 963
- CN-A- 104 427 331
- CN-A- 104 427 331
- CN-A- 104 468 266
- US-A1- 2015 015 722
- US-A1- 2017 019 454

## Description

### TECHNICAL FIELD

The embodiments of the present application relate to, but are not limited to, the field of communications and, in particular, relate to, but are not limited to, a video service quality assessment method and a video service quality assessment apparatus.

### BACKGROUND

At present, the Internet has become increasingly widely used, and video service has become one of the most commonly used services on the Internet and also the service with the fastest traffic growth on the Internet. Thus, the video service will undoubtedly generate the most traffic over a telecommunication network. Especially with the promotion of traffic-free or unlimited packages for specific applications by operators, live video will become the main form of video service on the Internet, and video-on-demand service will be increasingly promoted and popularized. Therefore, for telecom service operators, the quality of service of video service has become an important factor affecting perception of usage of Internet users, but no solution has been provided for operators to evaluate the quality of service of a video in the network. An operator serves as the first recipient of complaints from Internet users. The inability to evaluate the quality of service in the own network means that the operator cannot actively discover and solve problems; even when the quality of service is poor, the quality of service will be maintained at a relatively low level for a long time due to a lack of corresponding mechanisms. On one hand, it is not conducive to the improvement of the quality of service; on the other hand, targeted measures cannot be taken to improve user perception, resulting in the loss of customers. Therefore, how to achieve the quality assessment of video service in the network is an urgent problem to be solved at present. Further relevant technologies are also known from EP 2480001 A2 (TEKTRONIX INC [US]), 25 July 2012 (2012-07-25); and EP 2439953 A1 (HUAWEI TECH CO LTD [CN]), 11 April 2012 (2012-04-11).

### SUMMARY

Embodiments of the present application provide a video service quality assessment method, a video service quality assessment apparatus and a video service quality assessment device, and a readable storage medium. The features of the method and apparatus according to the present invention are defined in the independent claims. Further improvements are provided in the dependent claims.

The embodiments of the present application provide a video service quality assessment method. The method includes the step described below.

### BRIEF DESCRIPTION OF DRAWINGS

FIG. 1 is a flowchart of a video service quality assessment method according to an embodiment of the present application;
FIG. 2-1 is a schematic diagram of cell distribution according to an embodiment of the present application;
FIG. 2-2 is a schematic diagram of another cell distribution according to an embodiment of the present application;
FIG. 3 is a flowchart of a video service quality assessment method according to an embodiment of the present application;
FIG. 4 is a structure diagram of a video service quality assessment apparatus according to an embodiment of the present application;
FIG. 5 is a structure diagram of a video service quality assessment apparatus according to an embodiment of the present application;
FIG. 6 is a flowchart of a video service quality assessment method according to an embodiment of the present application; and
FIG. 7 is a structure diagram of a video service quality assessment device according to an embodiment of the present application.

### DETAILED DESCRIPTION

To illustrate the objects, technical solutions and advantages of the present application clearer, the embodiments of the present application are further described below in detail through embodiments in conjunction with the drawings. It is to be understood that the embodiments described herein are merely intended to explain the present application and are not intended to limit the present application.

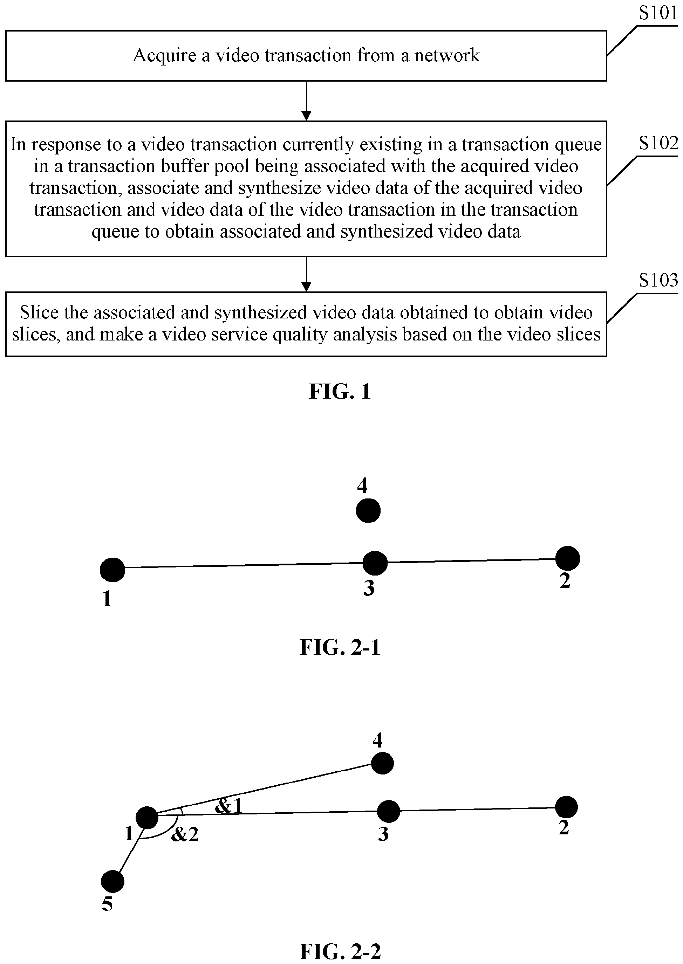

A video service quality assessment method is provided according to an embodiment. The method is applied to not only live video service but also video-on-demand service. Referring to FIG. 1, the method includes the steps described below.

In S101, a video transaction is acquired from a network.

In the embodiment, each video transaction includes one piece of video data of a video. The video may be a live video or an on-demand video. That is, in the embodiment, a video transaction of a live video or an on-demand video can be obtained from the network during a live video broadcasting process or a video-on-demand broadcasting process, so as to achieve the quality assessment for the live video or the on-demand video.

In addition, it is to be understood that in the embodiment, multiple live videos and/or on-demand videos may exist at a same moment in the network, or merely one live video or on-demand video may exist at one moment in the network. That is, the video data in the embodiment may include live video data and/or video-on-demand data.

Moreover, in the embodiment, lengths of video data included in different video transactions can be flexibly set to be the same or different. The video transactions of different videos or different types (the type may be defined according to the resolution of a video, the type of an application playing a video, whether a video is a live video or an on-demand video, and the like) of videos may also be set to be the same or different.

In the embodiment, for different videos or different types of videos, reporting frequencies and/or other reporting conditions of video transactions may also be flexibly set, for example, according to factors including but not limited to quality assessment requirements and network environment.

In S 102, in response to a video transaction currently existing in a transaction queue in a transaction buffer pool being associated with the acquired video transaction, video data of the acquired video transaction and video data of the video transaction in the transaction queue are associated and synthesized to obtain associated and synthesized video data.

In one example, when one video transaction is acquired and no video transaction currently existing in a transaction queue in the transaction buffer pool is associated with the acquired video transaction, the acquired video transaction is stored in the transaction buffer pool as a new transaction queue.

In the embodiment, one transaction queue may be identified by one video globally unique identifier, and the video globally unique identifiers of different transaction queues are different. Optionally, one transaction queue may be set to uniquely correspond to one video globally unique identifier.

In the embodiment, various video transactions in one transaction queue are associated with each other, and an association condition may be flexibly set according to specific application scenarios. In one example, for video transactions in one transaction queue, each time a video transaction enters, synthesizing processing is performed on the video data of the video transaction and the video data of other video transactions in the one transaction queue in real time, or the video data of all video transactions in the one transaction queue is associated and synthesized after it is determined that the video corresponding to the video transactions in the transaction queue has been played out.

In one example, the transaction buffer pool may include an association transaction buffer pool and a synthesizing transaction buffer pool. The association transaction buffer pool is used for storing transaction queues, that is, storing various associated video transactions. The synthesizing transaction buffer pool may be used for storing associated and synthesized video data obtained by performing synthesizing processing on the video data of the corresponding associated video transactions according to an association result.

It is to be understood that, in one example, merely information of a video transaction for association decision may be stored in the association transaction buffer pool, and in a case where video data of the video transaction is not used for association decision, such video data may not be stored in the association transaction buffer pool but may be directly stored in the synthesizing transaction buffer pool. Thereby, the overhead of buffer storage resources is reduced.

In one example, when the video data of various video transactions in a transaction queue is synthesized, the video transactions may be synthesized sequentially according to an order in which the video transactions enter the queue or may be synthesized flexibly according to other rules. For example, synthesizing is performed in a random order, in a descending order of video data lengths, or the like.

In S 103, the associated and synthesized video data obtained is sliced to obtain video slices, and a video service quality analysis is made based on the video slices.

In the embodiment, in units of transaction queues, the associated and synthesized video data corresponding to each transaction queue is sliced to obtain video slices, and a video service quality analysis is made based on the video slices, so that the quality of the video corresponding to each transaction queue can be obtained.

According to the embodiment, a comprehensive analysis of the video quality over the network can be made by synthesizing quality analysis results of various transaction queues, so that the overall video quality over the network can be obtained. That is, in the embodiment, a quality analysis may be made for each video, or the overall quality of the video service in the network may be analyzed based on the quality analysis results of respective videos.

In one example of the embodiment, for each video transaction, various information of the each video transaction may also be extracted from the network and such various information may be referred to as transaction information in the embodiment.

For example, the transaction information includes, but is not limited to, at least one of: video downlink traffic, a download rate, a video code rate, a video frame rate, a video resolution, a video type, a video packet loss rate, corresponding cell information or user identity information of video data of a video transaction.

In the embodiment, the transaction information may also be correspondingly stored in the transaction buffer pool. For example, in one example, the transaction buffer pool may be configured to include a transaction information buffer pool for storing transaction information.

Of course, in one example, the acquired transaction information may alternatively be directly configured to be in the video transaction so as to be directly stored in the association transaction pool along with an associated transaction.

In the embodiment, at least part of the transaction information may be used for association decision, and at least part of the information may also be used as a basis for quality assessment when the quality of a video slice is assessed. In one example, when the information used for association decision in the transaction information is not included in a video transaction, the information is extracted from the transaction information corresponding to the video transaction and filled into the video transaction. In the embodiment, such operation is referred to as a backfilling operation. For example, user identity information and/or cell information may be backfilled.

In the embodiment, when the associated and synthesized video data obtained is sliced, in one example, the time granularity of slices may be determined based on at least one of a video user distribution model, a base station distribution scenario, a terminal movement speed, a terminal data processing performance, a network performance or the like. For example, video slices with a time granularity of 5s may be established in one example. Of course, dynamic configuration of and modification to the time granularity may be supported in some examples.

The time granularity of slices of the same video may stay unchanged or dynamically change. The time granularities of slices of different videos may be the same, or set to be different according to requirements, and may be flexibly set according to specific application scenarios.

In one example of the embodiment, the video transaction includes corresponding video data and may further include a key field corresponding to the video data; such key field may be used for deciding whether two video transactions are associated.

In one example, the video transaction currently existing in the transaction queue in the transaction buffer pool being associated with the acquired video transaction includes what is described below:
a key field of at least one video transaction in the transaction queue matches a key field of the acquired video transaction, and an absolute value of a time difference between starting time of the video data of the acquired video transaction and current playing time of the transaction queue is less than a video playing aging time threshold.

The current playing time of the transaction queue is maximum starting time among starting time of video data of all video transactions in the transaction queue.

For example, it is assumed that video transaction D is currently acquired, merely transaction queue 1 exists in the current transaction pool, and associated video transactions A and B are included in transaction queue 1. It is assumed that video transaction A starts at 18:00, video transaction B starts at 18:05, and video transaction D starts at 18:06 (of course, which may also be 18:04, that is, video transaction D may take place earlier than video transaction A or video transaction B, but arrives later than video transaction A or video transaction B). Therefore, the current playing time of transaction queue 1 is 18:05. The video playing aging time threshold is set to 2 min (of course, it is to be understood that this threshold may also be flexibly set to other values). After video transaction D is acquired, one case is that the key field of video transaction D matches the key field of at least one of video transaction A or video transaction B. Moreover, at this time, the absolute value of the time difference between the starting time 18:06 of video transaction D and the current playing time 18:05 of transaction queue 1 is 1 min, which is less than the video playing aging time threshold of 2 min. It is determined that video transaction D is associated with video transaction A and video transaction B and is added into transaction queue 1, and the playing time of transaction queue 1 is set to 18:06. One case is that the key field of video transaction D matches neither the key field of video transaction A nor the key field of video transaction B (it is to be understood that the key fields of video transaction A, video transaction B and video transaction D may include the same or different content items), or the absolute value (3min in this case) of the time difference between the starting time of video transaction D (for example, the starting time of video transaction D is 18:02 in this case) and the current playing time 18:05 of transaction queue 1 is greater than the video playing aging time threshold of 2 min. In this case, no video transaction currently existing in a transaction queue in the transaction buffer pool is associated with the acquired video transaction D. New transaction queue 2 is set in the transaction buffer pool, and the acquired video transaction D is stored in transaction queue 2. That is, video transaction D is stored in the transaction buffer pool as a new transaction queue, and the playing time of the new transaction queue is set to 18:02.

In one example of the embodiment, the key field of a video transaction may include, but is not limited to, at least one of user identity information or video matching information.

Of course, in some examples, the starting time of video transaction A may also be included in the key field. For example, in one example, an association policy may include the user identity information, the video matching information (that is, an association field) and association time (that is, a video playing aging time threshold). In this case, the key field of the video transaction may include the user identity information, the video matching information (that is, the association field), and the starting time of the video transaction. Examples are described below.

In one example, the user identity information may include, but is not limited to, at least one of an international mobile subscriber identification number (IMSI), a temporary mobile subscriber identity (TMSI), a mobile subscriber international ISDN/PSTN number (MSISDN) or a telephone number.

In one example, the video matching information may include, but is not limited to, at least one of a video terminal address, a server address, a server port, a video application, host information, a playing file name or a video unique identifier.

In one example of the embodiment, making the video service quality analysis based on the video slices in S 103 may include acquiring at least one of the parameter values described below for quality assessment.

Video interactive response index value of the video slice. In one example, the video interactive response index value may be calculated based on a data amount required for first screen display of the video (for example, in some video playing processes, the playing can only be started after the amount of buffered data reaches a certain amount which may be data amount required for first screen display of the video) and a download rate of the video slice (in one example, which may be acquired or calculated from video information of the video transaction corresponding to the video slice). When the calculation is performed based on the data amount required for first screen display of the video and the download rate of the video slice, a corresponding algorithm can be flexibly adopted to obtain the video interactive response index value, as long as the obtained video interactive response index value reflects the video switching interactive response speed.

Video blurred screen frequency value of the video slice. In one example, the video blurred screen frequency value may be calculated by adopting a first algorithm and based on a data amount required for normal playing of the video and an actual download data amount of the video slice (that is, an actual data amount of the video slice). When calculation is performed based on the data amount required for normal playing of the video and the actual download data amount of the video slice, a specific calculation rule of the first algorithm may be flexibly selected, as long as the calculated video blurred screen frequency value can reflect the frequency of video playing problems caused by untimely video data transmission in a video playing process.

Video freezing frequency value of the video slice. In one example, the video freezing frequency value may also be calculated by adopting a second algorithm and based on a data amount required for normal playing of the video and an actual download data amount of the video slice (that is, the actual data amount of the video slice). When calculation is performed based on the data amount required for normal playing of the video and the actual download data amount of the video slice, a specific calculation rule of the second algorithm may also be flexibly selected, as long as the calculated video freezing frequency value can reflect the frequency of video playing problems caused by untimely video data transmission in a video playing process. Optionally, the second algorithm may be the same as or different from the preceding first algorithm.

Video blurred screen duration proportion of the video slice. In one example, the video blurred screen duration proportion may be calculated by adopting a third algorithm and based on a playable duration of an actual download data amount of the video slice and a duration of the video slice (that is, a duration during which the video slice should be played). When calculation is performed based on the playable duration of the actual download data amount and the duration of the video slice, a specific calculation rule of the third algorithm may also be flexibly selected, as long as the calculated video blurred screen duration proportion can reflect the severity of the continuous impact of video playing problems caused by untimely video data transmission in a video playing process.

Video freezing duration proportion of the video slice. In one example, the video freezing duration proportion may also be calculated based on the playable duration of the actual download data amount of the video slice and the duration of the video slice (that is, the duration during which the video slice should be played). When calculation is performed based on the playable duration of the actual download data amount and the duration of the video slice, a specific calculation rule of the fourth algorithm may also be flexibly selected, as long as the calculated video freezing duration proportion can reflect the severity of the continuous impact of video playing problems caused by untimely video data transmission in a video playing process. Optionally, the fourth algorithm may be the same as or different from the preceding third algorithm.

User perception index value of the video slice. In an embodiment, the user perception value is calculated based on a viewing experience index value and an interactive experience index value of the video slice; the interactive experience index value is calculated based on a video interactive response index value of the video slice; and the viewing experience index value is calculated based on a transmission quality index value and a video content quality index value of the video slice, and the transmission quality index value is calculated based on a video blurred screen frequency value and a video blurred screen duration proportion or is calculated based on a video freezing frequency value and a video freezing duration proportion. The user perception index value is used for assessing the frequency of an interaction operation performed by a user. Moreover, the degrees of influence of interactive experience on users with different behaviors are different: the influence of interactive quality for users who frequently switch videos, channels and definition is much greater than that for users who watch a certain program regularly. Therefore, through the adjustment of an interactive system, the actual experience of users can be more accurately assessed.

The parameter values used for quality assessment in the embodiment are not limited to these index values in the preceding examples and may be flexibly set according to specific application scenarios. For example, for quality assessment of video-on-demand service, the preceding video blurred screen frequency value or video freezing frequency value and the video blurred screen duration proportion or video freezing duration proportion may be replaced by a video lag frequency value and a video lag duration proportion respectively so as to meet the requirements of different scenario.

In the embodiment, the quality of the video service can be reflected based on the preceding parameter values for quality assessment of respective video slices of one video.

In one example of the embodiment, making the video service quality analysis based on the video slices in S 103 includes acquiring the user perception index values of the video slices; on such basis, a video quality problem can be further delimited based on index change between slices, and a quality degradation problem caused by a wireless continuous coverage cell handover can be further analyzed.

For example, in one example, in response to a difference between user perception index values of two adjacent video slices of associated and synthesized video data being greater than a preset user perception index value difference threshold, a difference between video content quality index values of the two adjacent video slices being within a preset quality index value difference range, cells corresponding to the two adjacent video slices being different, and a difference between transmission quality index values of the two adjacent video slices being greater than a preset transmission difference threshold, the cells corresponding to the two adjacent video slices are recorded as an abnormal handover cell pair.

In an embodiment, the video content quality index value is calculated based on at least one of parameters: a video source code rate, a video resolution or a video frame rate.

In one example, a cell corresponding to a video slice may be acquired from the transaction information or key field of a video transaction corresponding to the video slice.

In one example, a transmission index may include, but is not limited to, at least one type of parameter such as a downlink retransmission rate, an uplink packet loss rate, an uplink out-of-order rate or a downlink data transmission delay. In one example, when at least two types of the preceding parameters are included, it may be configured that as long as the difference between one type of parameter is greater than a corresponding preset difference threshold, it can be determined that the difference between the transmission quality index values of the two adjacent video slices is greater than the preset transmission difference threshold.

In the embodiment, two adjacent video slices of the associated and synthesized video data may be adjacent to each other. For example, assuming that the associated and synthesized video data is sliced to obtain video slice 1, video slice 2, video slice 3 and video slice 4 in sequence, adjacent video slices here in the embodiment refer to: video slice 1 and video slice 2, video slice 2 and video slice 3, video slice 3 and video slice 4, and so on. Of course, in some application scenarios, adjacent video slices may also be set as video slice 1 and video slice 2, and video slice 3 and video slice 4.

Through the preceding analysis, cells where video playing abnormalities occur during a handover process can be found and are referred to as an abnormal handover cell pair in the embodiment. Moreover, the cell corresponding to the former video slice is the hand-out cell, and the cell corresponding to the latter video slice is the hand-in cell, so that video quality problems can be located conveniently, and it can be specifically located handover between which cells has a quality problem. Thus, the timeliness and accuracy of problem discovery and solution are improved.

For a cell where a video playing abnormality occurs during a handover process, over coverage or weak coverage generally exists, resulting in abnormal playing. Therefore, optionally, in one example of the embodiment, the step of making the video service quality analysis based on the video slices may further include:
taking the abnormal handover cell pair as a unit, clustering the abnormal handover cell pair and other cell whose position information and position information of the abnormal handover cell pair satisfy a preset spatial clustering condition into one cluster. In one example, clustering may be specifically implemented by a corresponding spatial clustering algorithm.

In one example, for various abnormal handover cell pairs, the various abnormal handover cell pairs can be sorted according to the numbers of abnormalities occurring in the abnormal handover cell pairs, so that the severity of abnormal handover of each abnormal handover cell pair can be reflected, and then an analysis may be made in an order in which the abnormal handover cell pair with a serious handover abnormality is analyzed preferentially. In one example, the sorting of abnormal handover cell pairs may be implemented by a graph calculation method.

Then, when it is determined that other cell exists between a hand-in cell and a hand-out cell in the abnormal handover cell pair in each cluster, the hand-in cell is recorded as an over-coverage cell, and/or the other cell existing between the hand-in cell and the hand-out cell is recorded as a weak-coverage cell.

In the embodiment, the manner of determining whether other cell exists between the hand-in cell and the hand-out cell may be flexibly set. For example, assuming that the hand-in cell is cell 1 and the hand-out cell is cell 2, one determination manner is as described below.

Cell 1 and cell 2 are connected, and other cell existing on the connection line is regarded as a cell between cell 1 and cell 2. For example, as shown in FIG. 2-1, cell 3 is a cell between cell 1 and cell 2, and cell 4 is not. In this case, cell 1 may be marked as an over-coverage cell and/or cell 3 may be marked as a weak-coverage cell.

In another example, cells in the cluster that satisfy a preset condition in terms of parameters such as distance or direction with cell 1 and/or cell 2, such as cell 3, cell 4 and cell 5 in FIG. 2-2, can be determined first. Then, cell 1 and cell 2 are connected, cell 1 is connected to each cell satisfying the preset condition separately, and if the included angle between the connection line between a cell and cell 1 and the connection line between cell 1 and cell 2 is less than a preset angle threshold, the cell is regarded as a cell between cell 1 and cell 2. For example, the included angle between the connection line between cell 1 and cell 3 and the connection line between cell 1 and cell 2 is equal to 0, which is less than the preset angle threshold, so cell 3 is a cell between cell 1 and cell 2; the included angle & 1 between the connection line between cell 1 and cell 4 and the connection line between cell 1 and cell 2 is less than the preset angle threshold, so cell 4 is also a cell between cell 1 and cell 2; the included angle between the connection line between cell 1 and cell 5 and the connection line between cell 1 and cell 2 is greater than the preset angle threshold, so cell 5 is not a cell between cell 1 and cell 2; in this case, cell 1 may be marked as an over-coverage cell, and/or cells 3 and 4 may be marked as weak-coverage cells.

In the embodiment, optionally, after abnormal cells (including the over-coverage cell and/or the weak-coverage cell) are obtained through the analysis, the analysis of abnormality causes and locating of corresponding video slices in these abnormal cells may be further performed. For example, in one example, the step of making the video service quality analysis based on the video slices may further include the steps described below.

Video slices corresponding to the over-coverage cell and/or the weak-coverage cell are selected. In one example, a video slice may be selected according to cell information in the key field or transaction information of a video transaction corresponding to the video slice.

Transmission parameters corresponding to the video slices are acquired. The transmission parameters here may include various parameters that can be used to analyze the cause of the abnormality, such as reference signal receiving power (RSRP). In one example, when specific location information of the terminal corresponding to the video slice can be acquired, the specific location information of the terminal can also be acquired.

The cause of an abnormality is determined according to the acquired transmission parameters. When the specific location information of the terminal can be acquired, specific location information of the abnormality can also be determined, that is, specific location information of the terminal corresponding to the video slice can also be determined, so that accurate locating can be further performed within the coverage range of an abnormal cell.

It can be seen that according to the video service quality assessment method provided in the embodiment, the video multi-transaction association technology, video association multi-transaction synthesizing technology, video association and synthesizing transaction buffer technology, video slice technology, video slice index assessment technology, video slice degradation delimitation technology, video slice association wireless locating technology are adopted so that timely discovery of video service quality problems in complex video playing scenarios can be achieved, and the attribution and root cause of the problems can be timely discovered for the problems to be quickly solved. Thus, the reliability, maintainability and stability of the network and the perception and experience of users are improved.

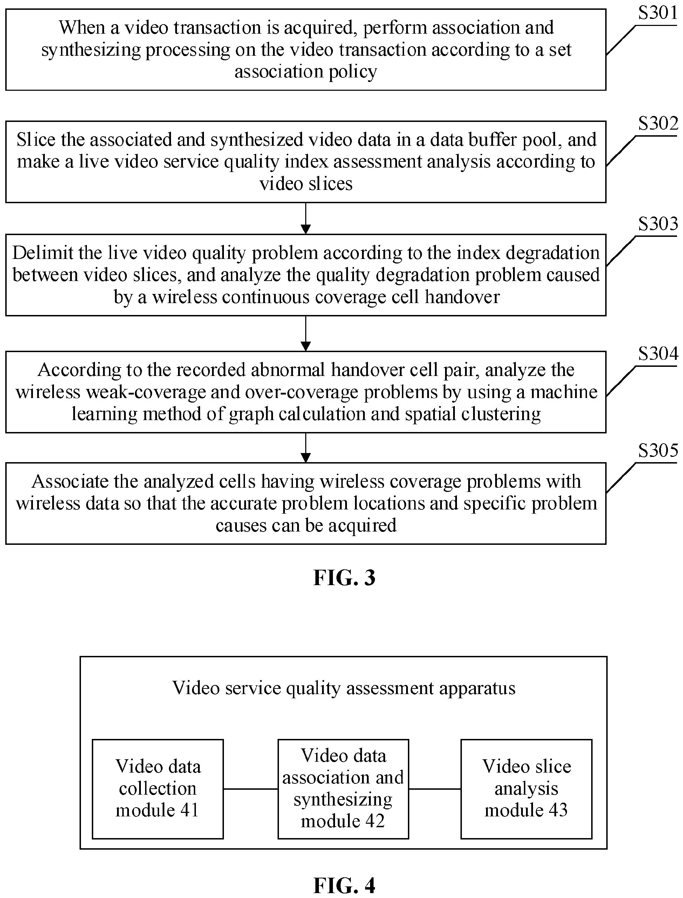

In order to facilitate understanding, a video service quality assessment method is illustrated by using an example in which the method is applied to the application scenario of live video on the basis of the preceding embodiment. As shown in FIG. 3, an Internet live video service quality assessment method provided in an embodiment includes the steps described below.

In S301: when a video transaction is acquired, association and synthesizing processing is performed on the video transaction according to a set association policy.

For example, in one example, the association policy is configured to include a user identity, an association field (that is, video matching information), and association time.

In one example, the user identity includes, but is not limited to, the IMSI, the TMSI and the MSISDN; the association field includes, but is not limited to, a terminal address, a server address, a server port, a video application (such as Youku and Migu), host information, a playing file name and a playing video unique identifier (such as a video identifier (VID)); the association time is video playing aging time. The user identity, the association field and the association time can be flexibly configured according to specific application requirements.

In one example, associating the video transaction may include the steps described below.

A1: Video transaction A1 is acquired (it is to be understood that for an encrypted played video, it may be refined to a transmission control protocol (TCP)/user datagram protocol (UDP) data packet here, the same below). It is determined that currently no video transaction existing in the transaction buffer pool is associated with video transaction A1. A video globally unique identifier is generated for video transaction A1 and is stored into the transaction buffer pool together with video transaction A1 (optionally, the transaction information of video transaction A1 is also included). At this time, a transaction queue exists in the transaction buffer pool, and video transaction A1 exists in the transaction queue.

B1: Video transaction B1 is acquired. If both the user identity information and association field of video transaction B1 match the user identity information and association field of video transaction A1, and a time difference is less than a configured association duration, video transaction A1 and video transaction B1 are considered to belong to the same playing video, a service globally unique identifier of video transaction A1 is directly used, and the current playing time is set to the larger time of starting time of video transaction A1 and starting time of video transaction B 1. Otherwise, step C1 is performed.

C1: It is considered that video transaction B1 is not associated with a video transaction. A video globally unique identifier is generated for video transaction B1 (optionally, the transaction information of video transaction B1 may also be included) and is stored into the transaction buffer pool together with video transaction information.

D1: Video transaction C1 is reported. If the user identity information and association field of video transaction C1 match the user identity information and association field of a video transaction in a transaction queue in the transaction buffer pool, and the difference between the time and the current playing time of the transaction queue is less than the configured association duration, it is considered that video transaction C1 and the video transaction in the transaction queue belong to the same playing video, the video globally unique identifier of the transaction queue is directly used, and the current playing time is set to the larger time of the playing time of video transaction C1 and the playing time of the transaction queue. Otherwise, step E1 is performed.

E1: It is considered that video transaction C1 is not associated with a video transaction. A video globally unique identifier is generated for video transaction C1 and is stored into the transaction buffer pool together with the association field and the video transaction information. The association and synthesizing process of a video transaction acquired later is similar. Repetition is not made here.

In one example, the transaction information of a video transaction includes, but is not limited to, at least one of video downlink traffic, a download rate, a video code rate, a video frame rate, a video resolution, a video type, a video packet loss rate, corresponding cell information or user identity information.

In S302, the associated and synthesized video data in a data buffer pool is sliced, and a live video service quality index assessment analysis is made according to video slices.

In one example, when the associated and synthesized video data of a transaction queue is sliced, video slices based on a corresponding time granularity can be established through a study of a video user distribution model and a comprehensive consideration of various factors such as a base station distribution scenario, a terminal movement speed and data processing performance. For example, the time granularity may be 5s, 10s, 15s, 18s, 20s, or the like. Then, the associated and synthesized video data is sliced to obtain video slices according to the set time granularity of the slices.

In one example, making the live video service quality index assessment analysis according to the video slices may specifically include, but is not limited to, the key indexes described below.

Video interactive response index value (that is, a live video interactive response). The index can reflect the live video switching interactive response speed. In one example, the index may be calculated based on a data amount required for first screen display of the live video and a download rate of the video slice.

Video blurred screen (or video freezing) frequency value (that is, live video freezing/blurred screen frequency) of the video slice. The index can reflect the frequency of video playing problems caused by untimely video data transmission in a live video playing process. In one example, the index may be calculated based on a data amount required for normal playing of the live video and an actual download data amount of the video slice.

Video blurred screen (or video freezing) duration proportion (that is, live video freezing/blurred screen duration) of the video slice. The index reflects the severity of the continuous impact of video playing problems caused by untimely video data transmission in a live video playing process. In one example, the index may be calculated based on a playable duration of an actual download data amount of the video slice a duration of the video slice (that is, a duration during which the video slice should be played).

User perception index value (that is, live video playing user perception) of the video slice. The index reflects the actual experience and perception of a live video playing user and may be formed by two parts. One part is interactive experience (that is, an interactive experience index value) which can be calculated based on a live video interactive response index. The other part is viewing experience (that is, a viewing experience index value) which can be calculated based on a video content quality index and a transmission quality index. The video content quality can be determined by indexes such as a video source code rate, a video resolution and a video frame rate. The transmission quality index is determined based on indexes of a live video blurred screen (or video freezing) frequency and a live video blurred screen (or video freezing) duration. The two parts can be weighted by an interactive system to obtain the final video playing user perception, that is, the user perception index value of the video slice.

In S303, the live video quality problem is delimited according to index degradation between video slices, and a quality degradation problem caused by a wireless continuous coverage cell handover is analyzed.

For example, in one example, the analysis process includes the steps described below.

The difference between user perception index values of two adjacent video slices of associated and synthesized video data is detected. If the difference is greater than a preset user perception index value difference threshold, it is considered that the index seriously degrades, and the process proceeds to the next step for analysis. Otherwise, the two video slices may not be processed.

It is detected whether the video source quality of the two video slices changes (it can be determined by deciding whether the difference between video content quality index values of the two adjacent video slices is within a preset quality index value difference range). If a change occurs, it is considered that the quality of the video source is the cause, and the two video slices may not be further processed. Otherwise, the process proceeds to the next step for analysis.

It is detected whether a cell where the two video slices are located change (that is, whether the two video slices correspond to the same cell). If no change occurs, the two video slices are not further processed. Otherwise, the process proceeds to the next step for analysis.

It is detected whether a basic index (that is, transmission index, for example, including but not limited to at least one of a downlink retransmission rate, an uplink packet loss, an uplink out-of-order rate or a downlink data transmission delay) of wireless transmission between two video slices changes. Moreover, it is determined whether the changed threshold exceeds a set threshold. If it is, it is considered that the index degradation between the video slices is caused by the wireless continuous coverage cell handover, the cells corresponding to the two video slices are recorded as an abnormal handover cell pair. The information such as the hand-out cell (the cell corresponding to the former video slice) and the hand-in cell (the cell corresponding to the latter video slice) is also recorded. Otherwise, the two video slices may not be further processed.

In S304, according to the recorded abnormal handover cell pair, the wireless weak-coverage and over-coverage problems are analyzed by using a machine learning method of graph calculation and spatial clustering.

For example, in one example, a wireless weak-coverage and over-coverage analysis process includes the steps described below.

The graph calculation is used for sorting various abnormal handover cell pairs according to the severity of the abnormalities. The graph can show a relationship between data as well as the strength and direction of the relationship. Through graph calculation, the relationship between the numbers of abnormalities in the abnormal handover cell pairs can be calculated, so that the relationship of an abnormal handover between cells can be intuitively calculated, the severity of the abnormal handover can be quantified, and a serious handover abnormality is analyzed preferentially.

According to the longitude and latitude information of cells in the abnormal handover cell pair in the graph calculation and the longitude and latitude information of other surrounding cells, a spatial clustering analysis is performed to cluster other cells that satisfy a condition and the abnormal handover cell pair into one type, which is referred to as a cluster in the embodiment.

According to the cell clustering result output from the spatial clustering, for each cluster, the distance between the hand-in cell and the hand-out cell in the abnormal handover cell pair is used as a reference. If other cell exists within the distance range, the next step is performed. Otherwise, no further processing is performed.

If it is detected that the included angle between the connection line between the hand-in cell and the hand-out cell in the abnormal handover cell pair and the connection line between the hand-in cell and the other cell is less than the set angle threshold, it is considered that the other cell exists on the handover path between the hand-out cell and the hand-in cell, so that it is determined to record the hand-in cell as an over-coverage cell and to record the other cell on the handover path as a weak-coverage cell.

In S305, the analyzed cells having wireless coverage problems may be associated with wireless data (including but not limited to various transmission parameters) so that the accurate problem locations and specific problem causes can be acquired and can be incorporated into the production process of operators so as to quickly solve user complaints or actively guarantee the quality of live video service.

For example, the steps described below are included in one example.

Corresponding video slices are selected according to the analyzed cells having wireless coverage problems.

Based on the video slice, the association field of the video transaction corresponding to the video slice is used to match wireless data to acquire wireless key information such as the current longitude and latitude, RSRP and the like. Optionally, in some examples, the association field includes application protocol identifiers (S1 Application Protocol (S1AP) IDs) or the like at both ends.

According to the wireless key information, the specific location and cause of the video playing problem can be found, which is convenient for further rapid and accurate problem location and problem cause determination and provides a basis for problem repair.

It can be seen that through the video service quality assessment method provided in the embodiment, the service quality of live video service can be comprehensively assessed. The assessment result can effectively reflect the real experience and perception of users. On the basis of effective assessment of live video service, the network can be actively operated and maintained and the customer experience can be guaranteed in time. For wireless network problems, the root cause analysis and locating can be performed quickly and can be incorporated into the production process of operators so as to guide operators to quickly solve network problems, improve the reliability, maintainability and stability of the network, and enhance the perception and experience of users. Thus, user satisfaction is improved, user stickiness is increased and the network value of operators is manifested.

A video service quality assessment apparatus is further provided according to an embodiment, which may be applied to various video service quality assessment devices. Referring to FIG. 4, the apparatus may include a video data collection module 41, a video data association and synthesizing module 42 and a video slice analysis module 43.

The video data collection module 41 is configured to acquire a video transaction from a network. In the embodiment, each video transaction includes one piece of video data of a video. As described above, the video may be a live video or an on-demand video. That is, in the embodiment, a video transaction of a live video or an on-demand video can be obtained from the network during a live video broadcasting process or a video-on-demand broadcasting process so as to achieve the quality assessment for the live video or the on-demand video.

The video data association and synthesizing module 42 is configured to: in response to a video transaction currently existing in a transaction queue in a transaction buffer pool being associated with the video transaction acquired by the video data collection module 41, associate and synthesize video data of the acquired video transaction and video data of the video transaction in the transaction queue to obtain associated and synthesized video data.

In one example, the video data association and synthesizing module 42 is further configured to: in response to no video transaction currently existing in a transaction queue in the transaction buffer pool being associated with the video transaction acquired by the video data collection module 41, store the acquired video transaction in the transaction buffer pool as a new transaction queue.

In the embodiment, it may be set by the video data association and synthesizing module 42 that: one transaction queue may be identified by one video globally unique identifier, and the video globally unique identifiers of different transaction queues are different. Optionally, one transaction queue may be set to uniquely correspond to one video globally unique identifier.

In the embodiment, various video transactions in one transaction queue are associated with each other, and an association condition may be flexibly set according to specific application scenarios. Optionally, in one example, for video transactions in one transaction queue, each time a video transaction enters, the video data association and synthesizing module 42 performs synthesizing processing on the video data of the video transaction and the video data of other video transactions in the one transaction queue in real time, or the video data association and synthesizing module 42 associates and synthesizes the video data of all video transactions in the one transaction queue after it is determined that the video corresponding to the video transactions in the transaction queue has been played out. Therefore, in one example, the transaction buffer pool may include an association transaction buffer pool and a synthesizing transaction buffer pool. The association transaction buffer pool is used for storing transaction queues, that is, storing various associated video transactions. The synthesizing transaction buffer pool may be used for storing associated and synthesized video data obtained by performing synthesizing processing on the video data of the corresponding associated video transactions according to an association result.

The video slice analysis module 43 is configured to slice the associated and synthesized video data to obtain video slices and make a video service quality analysis based on the video slices.

In the embodiment, in units of transaction queues, the associated and synthesized video data corresponding to each transaction queue may be sliced by the video slice analysis module 43 to obtain video slices, and a video service quality analysis is made by the video slice analysis module 43 based on the video slices, so that the quality of the video corresponding to each transaction queue can be obtained.

In the embodiment, a comprehensive analysis of the video quality over the network can be made by the video slice analysis module 43 by synthesizing quality analysis results of various transaction queues, so that the overall video quality over the network can be obtained. That is, in the embodiment, a quality analysis may be made for each video, or the overall quality of the video service in the network may be analyzed based on the quality analysis results of respective videos.

In one example of the embodiment, for each video transaction, the various information of the each video transaction may also be extracted from the network by the video data collection module 41 and may be referred to as transaction information in the embodiment. For example, the transaction information includes, but is not limited to, at least one of: video downlink traffic, a download rate, a video code rate, a video frame rate, a video resolution, a video type, a video packet loss rate, corresponding cell information or user identity information of video data of a video transaction. Moreover, in the embodiment, the transaction information may also be correspondingly stored in the transaction buffer pool. For example, in one example, the transaction buffer pool may be configured to include a transaction information buffer pool for storing transaction information. Of course, in one example, the acquired transaction information may alternatively be directly configured to be in the video transaction so as to be directly stored in the association transaction pool along with an associated transaction. In the embodiment, at least part of the transaction information may be used for association decision, and at least part of the information may also be used as a basis for quality assessment when the quality of a video slice is assessed. In one example, when the information used for association decision in the transaction information is not included in a video transaction, the information is extracted from the transaction information corresponding to the video transaction and filled into the video transaction by the video data collection module 41. In the embodiment, such operation is referred to as a backfilling operation.

In the embodiment, when slicing the associated and synthesized video data obtained, in one example, the video slice analysis module 43 may determine the time granularity of slices based on at least one of a video user distribution model, a base station distribution scenario, a terminal movement speed, a terminal data processing performance, a network performance or the like. For example, the video slices with a time granularity of 10s may be established in one example. Of course, dynamic configuration of and modification to the time granularity may be supported in some examples.

In one example of the embodiment, the video transaction includes corresponding video data and may further include a key field corresponding to the video data; such key field may be used for deciding whether two video transactions are associated. In one example, the video transaction currently existing in the transaction queue in the transaction buffer pool being associated with the acquired video transaction determined by the video data association and synthesizing module 42 includes that a key field of at least one video transaction in the transaction queue matches a key field of the acquired video transaction and that an absolute value of a time difference between starting time of the video data of the acquired video transaction and current playing time of the transaction queue is less than a video playing aging time threshold.

The current playing time of the transaction queue is maximum starting time among starting time of video data of all video transactions in the transaction queue.

In one example of the embodiment, the video slice analysis module 43 is configured to make at least one of the video service quality analyses described below based on the video slices.

Video interactive response index value of the video slice. In one example, the video interactive response index value may be calculated based on a data amount required for first screen display of the video and a download rate of the video slice, as long as the obtained video interactive response index value can reflect the video switching interactive response speed.

Video blurred screen frequency value of the video slice. In one example, the video blurred screen frequency value may be calculated by adopting a first algorithm and based on a data amount required for normal playing of the video and an actual download data amount of the video slice (that is, an actual data amount of the video slice). When calculation is performed based on the data amount required for normal playing of the video and the actual download data amount of the video slice, a specific calculation rule of the first algorithm may be flexibly selected, as long as the calculated video blurred screen frequency value can reflect the frequency of video playing problems caused by untimely video data transmission in a video playing process.

Video freezing frequency value of the video slice. In one example, the video freezing frequency value may also be calculated by adopting a second algorithm and based on a data amount required for normal playing of the video and an actual download data amount of the video slice (that is, the actual data amount of the video slice). A specific calculation rule of the second algorithm may also be flexibly selected, as long as the calculated video freezing frequency value can reflect the frequency of video playing problems caused by untimely video data transmission in a video playing process. Optionally, the second algorithm may be the same as or different from the preceding first algorithm.

Video blurred screen duration proportion of the video slice. In one example, the video blurred screen duration proportion may be calculated by adopting a third algorithm and based on a playable duration of an actual download data amount of the video slice and a duration of the video slice (that is, a duration during which the video slice should be played). When calculation is performed based on the playable duration of the actual download data amount and the duration of the video slice, a specific calculation rule of the third algorithm may also be flexibly selected, as long as the calculated video blurred screen duration proportion can reflect the severity of the continuous impact of video playing problems caused by untimely video data transmission in a video playing process.

Video freezing duration proportion of the video slice. In one example, the video freezing duration proportion may also be calculated based on the playable duration of the actual download data amount of the video slice and the duration of the video slice (that is, the duration during which the video slice should be played). A specific calculation rule of the fourth algorithm may also be flexibly selected, as long as the calculated video freezing duration proportion can reflect the severity of the continuous impact of video playing problems caused by untimely video data transmission in a video playing process. Optionally, the fourth algorithm may be the same as or different from the preceding third algorithm.

User perception index value of the video slice. In one example, the user perception value is calculated based on a viewing experience index value and an interactive experience index value of the video slice. The interactive experience index value is calculated based on a video interactive response index value of the video slice. The viewing experience index value is calculated based on a transmission quality index value and a video content quality index value of the video slice. The transmission quality index value is calculated based on a video blurred screen (or video freezing) frequency value and a video blurred screen (or video freezing) duration proportion. The user perception index value may be used for assessing the frequency of an interaction operation performed by a user.

In one example of the embodiment, the video slice analysis module 43 is configured to acquire user perception index values of video slices and is further configured to: in response to a difference between user perception index values of two adjacent video slices being greater than a preset user perception index value difference threshold, a difference between video content quality index values of the two adjacent video slices being within a preset quality index value difference range, cells corresponding to the two adjacent video slices being different, and a difference between transmission quality index values of the two adjacent video slices being greater than a preset transmission difference threshold, record the cells corresponding to the two adjacent video slices as an abnormal handover cell pair.

In one example, the video content quality index value may be calculated based on at least one of parameters such as a video source code rate, a video resolution or a video frame rate.

In one example, a cell corresponding to a video slice may be acquired from the transaction information or key field of a video transaction corresponding to the video slice.

In one example, a transmission index may include, but is not limited to, at least one type of parameter such as a downlink retransmission rate, an uplink packet loss rate, an uplink out-of-order rate or a downlink data transmission delay. In one example, when at least two types of the preceding parameters are included, it may be configured that as long as the difference between one type of parameter is greater than a corresponding preset difference threshold, it can be determined that the difference between the transmission quality index values of the two adjacent video slices is greater than the preset transmission difference threshold.

Through the preceding analysis, the video slice analysis module 43 can find cells where video playing abnormality occurs during a handover process, which are referred to as an abnormal handover cell pair in the embodiment. Moreover, the cell corresponding to the former video slice is the hand-out cell, and the cell corresponding to the latter video slice is the hand-in cell, so that video quality problems can be located conveniently, and it can be specifically located handover between which cells has a quality problem. Thus, the timeliness and accuracy of problem discovery and solution are improved.

On the preceding basis, the video slice analysis module 43 may also be configured to use the abnormal handover cell pair as a unit and cluster the abnormal handover cell pair and other cell whose position information and position information of the abnormal handover cell pair satisfy a preset spatial clustering condition into one cluster; and in response to determining that other cell exists between a hand-in cell and a hand-out cell in the abnormal handover cell pair in each cluster, record the hand-in cell as an over-coverage cell and/or record the other cell existing between the hand-in cell and the hand-out cell as a weak-coverage cell.

In one example of the embodiment, the video slice analysis module 43 may further be configured to select video slices corresponding to the over-coverage cell and/or the weak-coverage cell, acquire transmission parameters corresponding to the video slices, and in one example, may acquire the specific location information of the terminal when specific location information of the terminal corresponding to the video slice can be acquired. Then, the video slice analysis module 43 determines a cause of abnormality according to the acquired transmission parameters and may determine the specific location information of the abnormality when the specific location information of the terminal can be acquired. That is, the video slice analysis module 43 can determine the specific location information of the terminal corresponding to the video slice so as to further perform accurate locating within the coverage range of an abnormal cell.

The functions of the video data collection module 41, the video data association and synthesizing module 42 and the video slice analysis module 43 may be implemented by a processor or a controller in the embodiment. According to the video service quality assessment apparatus provided in the embodiment, the video multi-transaction association technology, video association multi-transaction synthesizing technology, video association and synthesizing transaction buffer technology, video slice technology, video slice index assessment technology, video slice degradation delimitation technology, video slice association wireless locating technology are adopted so that the traffic quality of video service can be comprehensively assessed and the attribution and root cause of the problems can be timely discovered for the problems to be quickly solved. Thus, the reliability, maintainability and stability of the network and the perception and experience of users are improved.

To facilitate understanding, an embodiment is illustrated on the basis of the preceding embodiments and by using an example in which a video service quality assessment apparatus of a specific structure is applied to a live video application scenario.

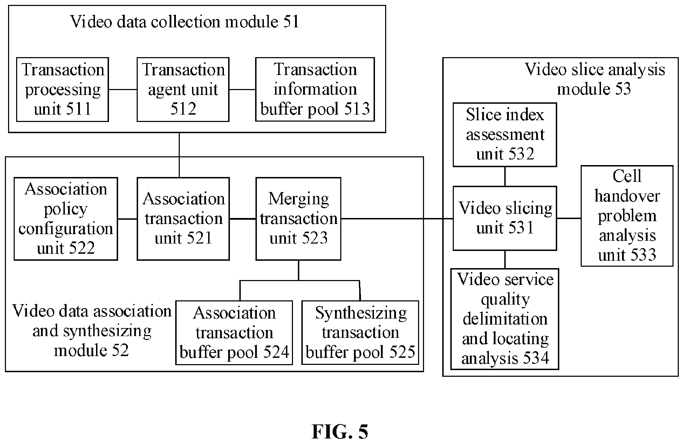

Referring to FIG. 5, a video data collection module 51, a video data association and synthesizing module 52 and a video slice analysis module (that is, video slice delimitation and locating module) 53 are included in the schematic diagram illustrating a structure of an Internet live video service quality assessment apparatus. In one example, the structures of various modules are described below.

The video data collection module 51 may include a transaction processing unit 511, a transaction agent unit 512 and a transaction information buffer pool 513.

The transaction processing unit 511 collects video-related data from a network to generate a video transaction, extracts video transaction information from the video transaction and reports the video transaction information to the transaction agent unit 512.

The transaction agent unit 512 receives the video transaction information from the transaction processing unit 511, puts the transaction information into a transaction information buffer pool to perform necessary operations such as association backfilling and key field extraction, and then reports the video transaction to an association transaction unit 521 of the video data association and synthesizing module 52.

The transaction information buffer pool 513 caches the video transaction information for the association backfilling and key field extraction as needed.

The video data association and synthesizing module 52 may include the association transaction unit 521, an association policy configuration unit 522, a merging transaction unit 523, an association transaction buffer pool 524 and a synthesizing transaction buffer pool 525.

The association transaction unit 521 acquires the video transaction from the transaction agent unit 512, associating multiple transactions and carrying an association identifier in the multiple transactions according to the key fields and a configured association policy, and then sends the video transactions to the merging transaction unit 523 for further processing.

The association policy configuration unit 522 is responsible for configuring the transaction association policy and sending the transaction association policy to the association transaction unit 521 to take effect.

The merging transaction unit 523 acquires the video transactions carrying the association identifier from the association transaction unit 521. In one example, if the video transactions are pushed into the association transaction buffer pool 524 before the video is played out, corresponding video transactions in the association transaction buffer pool 524 are aged and deleted when the video is played out. In one example, the video data of the associated video transactions may also be synthesized and pushed into the synthesizing transaction buffer pool 525, and then a merged video is sent to the video slicing unit 531.

The association transaction buffer pool 524 is responsible for caching video transactions so as to support subsequent synthesizing processing of video transactions.

The synthesizing transaction buffer pool 525 is responsible for caching the synthesized video data so as to support reorganizing the synthesized video transactions to restore into a complete video playing.

The video slice analysis module 53 includes a video slice unit 531, a slice index assessment unit 532, a cell handover problem analysis unit 533 and a video service quality delimitation and locating analysis 534.

The video slicing unit 531 acquires the associated and synthesized video data from the merging transaction unit 523 and slices the associated and synthesized video data according to 5s. A video key parameter may be carried in a video slice and may include, but is not limited to, user identity information (for example, a user identifier), cell information, video downlink traffic, a video code rate, a video frame rate, a video resolution, a video type and a video packet loss. Then, the slice index assessment unit 532 assesses the index of the video slice. Then, the cell handover problem analysis unit 533 analyzes a video cell handover problem. Finally, a cell with a wireless coverage problem can be analyzed by the video service quality delimitation and locating analysis 534.

The slice index assessment unit 532 is responsible for assessing the index of the video slice. The assessable index includes, but is not limited to, at least one of a video interactive response index value, a video blurred screen (or video freezing) frequency value, a video blurred screen (or video freezing) duration proportion or a user perception index value.

The cell handover problem analysis unit 533 may be configured to find out an abnormal handover cell pair causing a decrease of the user perception of the video playing due to a handover, and analyze problems such as wireless weak-coverage and over-coverage according to a relationship between the abnormal handover cell pair and a neighboring cell in project parameter by using a machine learning method of graph calculation and spatial clustering.

The video service quality delimitation and locating analysis 534 is responsible for associating with wireless data (including but not limited to various transmission parameters)and acquiring an accurate problem location and a specific problem cause.

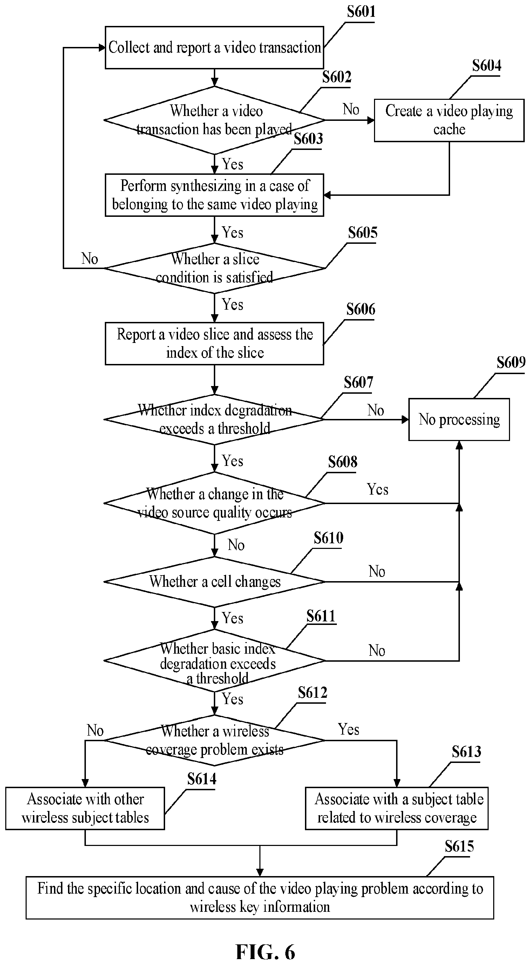

As shown in FIG. 6, an embodiment provides a processing flowchart of an Internet live video service quality assessment method based on the preceding apparatus. The method may include the steps described below.

In S601, the video transaction agent unit 512 collects a video transaction and reports the video transaction to the association transaction unit 521.

In S602, the video association transaction unit 521 detects, according to the preset association policy, whether the video transaction is a video transaction of a video that has been played, and if so, the process proceeds to S603; otherwise, the process proceeds to S604.

In S603, if the video transaction belongs to the same video playing, the merging transaction unit 523 synthesizes the video transaction into a cache of the played video.

In S604, the merging transaction unit 523 creates a new video playing cache.

In S605, the video slicing unit 531 detects whether a video slicing condition is satisfied (for example, up to 5s), and if so, the process proceeds to S606; otherwise, the process proceeds to S601.

In S606, the video slicing unit 531 slices the video playing and the slice index assessment unit 532 assesses an index of slices.

In S607, the cell handover problem analysis unit 533 detects, when comparing a current slice with a previous slice, whether an index degradation exceeds a threshold, and if so, the process proceeds to S608; otherwise, the process proceeds to S609.

In S608, the cell handover problem analysis unit 533 detects whether a video source quality of the current slice changes with respect to a video source quality of the previous slice. If the change occurs, the process proceeds to S609; otherwise, the process proceeds to S610.

In S609, no further processing is performed.

In S610, the cell handover problem analysis unit 533 detects whether a cell of the current slice changes with respect to a cell of the previous slice. If the change occurs, the process proceeds to S611; otherwise, the process proceeds to S609.

In S611, the cell handover problem analysis unit 533 detects, when comparing the current slice with the previous slice, whether a basic index degradation exceeds a threshold, and if so, the process proceeds to S612; otherwise, the process proceeds to S609.

In S612, whether a wireless coverage problem exists is detected through graph calculation and spatial clustering, and if so, the process proceeds to S613; otherwise, the process proceeds to S614.

In S613, the video service quality delimitation and locating analysis 534 acquires wireless coverage related information through associating with a subject table related to wireless coverage.

In S614, the video service quality delimitation and locating analysis 534 acquires wireless related information through associating with other wireless subject tables.

In S615, a specific location and cause of a video playing problem can be found according to wireless key information.

The Internet live video service quality assessment apparatus provided in the embodiment is an apparatus for delimiting and locating problems and assessing end-to-end indexes of the live video service quality in the technical field of user perception big data analysis. Through the apparatus, the traffic quality of live video service can be comprehensively assessed. The assessment result can effectively reflect the real experience and perception of users. On the basis of effective assessment of live video service, the network can be actively operated and maintained and the customer experience can be guaranteed in time. For wireless network problems, the root cause analysis and locating can be performed quickly and can be incorporated into the production process of operators so as to guide operators to quickly solve network problems, improve the reliability, maintainability and stability of the network, and enhance the perception and experience of users. Thus, user satisfaction is improved, user stickiness is increased and the network value of operators is manifested.

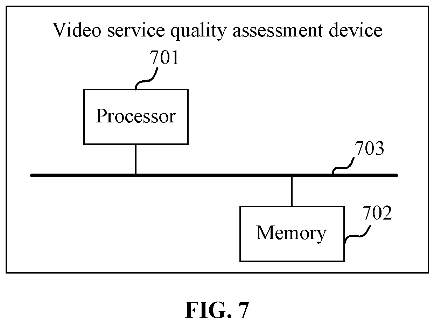

An embodiment further provides a video service quality assessment device. Referring to FIG. 7, the device includes a processor 701, a memory 702 and a communication bus 703.

The communication bus 703 is configured to implement connection communication between the processor 701 and the memory 702.

The processor 701 is configured to execute one or more computer programs stored in the memory 702 to implement steps of the video service quality assessment method according to each of the preceding embodiments.

An embodiment further provides a computer-readable storage medium. The computer-readable storage medium includes volatile or nonvolatile and removable or non-removable media implemented in any method or technology for the storage of information (such as computer-readable instructions, data structures, computer program modules or other data). The computer-readable storage medium includes, but is not limited to, a random access memory (RAM), a read-only memory (ROM), an electrically erasable programmable read only memory (EEPROM), a flash memory or other memory technologies, a compact disc read-only memory (CD-ROM), a digital versatile disc (DVD) or other optical disc storage, a magnetic cassette, a magnetic tape, a magnetic disk or other magnetic storage equipment, or any other medium that can be used for storing desired information and that can be accessed by a computer.

In one example, the computer-readable storage medium in the embodiment may be configured to store one or more computer programs. The one or more computer programs are executable by one or more processors to implement steps of the video service quality assessment method according to each of the preceding embodiments.

An embodiment further provides a computer program (or computer software). The computer program may be distributed on a computer-readable medium and executed by a computing apparatus to implement at least one step of the video service quality assessment method according to each of the preceding embodiments. Moreover, in some cases, the at least one step illustrated or described may be performed in a sequence different from the sequences described in the preceding embodiments.

An embodiment further provides a computer program product. The computer program product includes a computer-readable apparatus. The preceding computer program is stored on the computer-readable apparatus. The computer-readable apparatus in the embodiment may include the computer-readable storage medium described above.

It can be seen that it is to be understood by those skilled in the art that some or all steps of the preceding method and function modules/units in the preceding system or apparatus may be implemented as software (which may be implemented by computer program codes executable by a computing apparatus), firmware, hardware and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits.

Additionally, as is known to those having ordinary skill in the art, communication media generally include computer-readable instructions, data structures, computer program modules, or other data in carriers or in modulated data signals transported in other transport mechanisms and may include any information delivery medium. Therefore, the present application is not limited to any particular combination of hardware and software.

## Claims

1. A video service quality assessment method, comprising:
acquiring (S101) a video transaction from a network, wherein each video transaction comprises one piece of video data of a video;
in response to a video transaction currently existing in a transaction queue in a transaction buffer pool being associated with the acquired video transaction, associating and synthesizing (S102) video data of the acquired video transaction and video data of the video transaction in the transaction queue to obtain associated and synthesized video data; and
slicing (S 103) the associated and synthesized video data to obtain video slices, and making (S 103) a video service quality analysis based on the video slices;
**characterized in that** making (S103) the video service quality analysis based on the video slices comprises: acquiring a user perception index value of each of the video slices, wherein the user perception index value is calculated based on a viewing experience index value and an interactive experience index value of each of the video slices; the interactive experience index value is calculated based on a video interactive response index value of each of the video slices, the video interactive response index value is used for reflecting a video switching interactive response speed; and the viewing experience index value is calculated based on a transmission quality index value and a video content quality index value of each of the video slices, the video content quality index value is calculated based on at least one of a video source code rate, a video resolution or a video frame rate, and the transmission quality index value is calculated based on a video blurred screen frequency value and a video blurred screen duration proportion or is calculated based on a video freezing frequency value and a video freezing duration proportion; and
in response to a difference between user perception index values of two adjacent video slices being greater than a preset user perception index value difference threshold, a difference between video content quality index values of the two adjacent video slices being within a preset quality index value difference range, cells corresponding to the two adjacent video slices being different, and a difference between transmission quality index values of the two adjacent video slices being greater than a preset transmission difference threshold, recording cells corresponding to the two adjacent video slices as an abnormal handover cell pair.

2. The video service quality assessment method of claim 1, wherein associating and synthesizing video data of video transactions satisfying a preset association condition comprises:
in response to no video transaction currently existing in a transaction queue in the transaction buffer pool being associated with the acquired video transaction, storing the acquired video transaction in the transaction buffer pool as a new transaction queue.

3. The video service quality assessment method of claim 1, wherein the video transaction further comprises a key field of the piece of video data; and
wherein the video transaction currently existing in the transaction queue in the transaction buffer pool being associated with the acquired video transaction comprises:
a key field of at least one video transaction in the transaction queue matching a key field of the acquired video transaction, and an absolute value of a time difference between starting time of the video data of the acquired video transaction and current playing time of the transaction queue being less than a video playing aging time threshold;
wherein the current playing time of the transaction queue is maximum starting time of starting time of video data of all video transactions in the transaction queue, wherein the key field comprises at least one of user identity information or video matching information.

4. The video service quality assessment method of claim 3, wherein the video matching information comprises at least one of a video terminal address, a server address, a server port, a video application, host information, a playing file name or a video unique identifier.

5. The video service quality assessment method of any one of claims 1 to 4, wherein making (S103) the video service quality analysis based on the video slices further comprises at least one of:
acquiring the video interactive response index value of each of the video slices, wherein the video interactive response index value is calculated based on a data amount required for first screen display of the video and a download rate of each of the video slices;
acquiring the video blurred screen frequency value of each of the video slices, wherein the video blurred screen frequency value is calculated by adopting a first algorithm and based on a data amount required for normal playing of the video and an actual download data amount of each of the video slices;
acquiring the video freezing frequency value of each of the video slices, wherein the video freezing frequency value is calculated by adopting a second algorithm and based on a data amount required for normal playing of the video and an actual download data amount of each of the video slices;
acquiring the video blurred screen duration proportion of each of the video slices, wherein the video blurred screen duration proportion is calculated by adopting a third algorithm and based on a playable duration of an actual download data amount of each of the video slices and a duration of the each of the video slices; or
acquiring the video freezing duration proportion of each of the video slices, wherein the video freezing duration proportion is calculated by adopting a fourth algorithm and based on a playable duration of an actual download data amount of each of the video slices and a duration of each of the video slices.

6. The video service quality assessment method of claim 1, wherein making (S103) the video service quality analysis based on the video slices further comprises:
using the abnormal handover cell pair as a unit, and clustering the abnormal handover cell pair and other cell whose position information and position information of the abnormal handover cell pair satisfy a preset spatial clustering condition into one cluster; and
for each cluster, in response to determining that other cell exists between a hand-in cell and a hand-out cell in the abnormal handover cell pair, recording the hand-in cell as an over-coverage cell, and/or recording the other cell existing between the hand-in cell and the hand-out cell as a weak-coverage cell.

7. The video service quality assessment method of claim 6, wherein making (S103) the video service quality analysis based on the video slices further comprises:
selecting video slices corresponding to the over-coverage cell and/or the weak-coverage cell;
acquiring transmission parameters corresponding to the video slices which corresponds to the over-coverage cell and/or the weak-coverage cell; and
determining a cause of an abnormality according to the transmission parameters.

8. The video service quality assessment method of any one of claims 1 to 4, wherein the video data comprises live video data and/or video-on-demand data.

9. A video service quality assessment apparatus, comprising:
a video data collection module (41, 51), which is configured to acquire a video transaction from a network, wherein each video transaction comprises one piece of video data of a video;
a video data association and synthesizing module (42, 52), which is configured to: in response to a video transaction currently existing in a transaction queue in a transaction buffer pool being associated with the video transaction acquired by the video data collection module, associate and
synthesize video data of the acquired video transaction and video data of the video transaction in the transaction queue to obtain associated and synthesized video data; and
a video slice analysis module (43, 53), which is configured to slice the associated and synthesized video data to obtain video slices, and make a video service quality analysis based on the video slices;
**characterized in that**, the video slice analysis module (43, 53) is configured to:
acquire a user perception index value of each of the video slices, wherein the user perception index value is calculated based on a viewing experience index value and an interactive experience index value of each of the video slices; the interactive experience index value is calculated based on a video interactive response index value of each of the video slices, the video interactive response index value is used for reflecting a video switching interactive response speed; and the viewing experience index value is calculated based on a transmission quality index value and a video content quality index value of each of the video slices, the video content quality index value is calculated based on at least one of a video source code rate, a video resolution or a video frame rate, and the transmission quality index value is calculated based on a video blurred screen frequency value and a video blurred screen duration proportion or is calculated based on a video freezing frequency value and a video freezing duration proportion; and
in response to a difference between user perception index values of two adjacent video slices being greater than a preset user perception index value difference threshold, a difference between video content quality index values of the two adjacent video slices being within a preset quality index value difference range, cells corresponding to the two adjacent video slices being different, and a difference between transmission quality index values of the two adjacent video slices being greater than a preset transmission difference threshold, record cells corresponding to the two adjacent video slices as an abnormal handover cell pair.

10. The video service quality assessment apparatus of claim 9, wherein the video data association and synthesizing module (42, 52) is further configured to: in response to no video transaction currently existing in a transaction queue in the transaction buffer pool being associated with the acquired video transaction, store the acquired video transaction in the transaction buffer pool as a new transaction queue.

11. The video service quality assessment apparatus of claim 9 or 10, wherein the video slice analysis module (43, 53) is configured to perform at least one of the following video service quality analyses based on the video slices:
acquiring the video interactive response index value of each of the video slices, wherein the video interactive response index value is calculated based on a data amount required for first screen display of the video and a download rate of each of the video slices;
acquiring the video blurred screen frequency value of each of the video slices, wherein the video blurred screen frequency value is calculated by adopting a first algorithm and based on a data amount required for normal playing of the video and an actual download data amount of each of the video slices;
acquiring the video freezing frequency value of each of the video slices, wherein the video freezing frequency value is calculated by adopting a second algorithm and based on a data amount required for normal playing of the video and an actual download data amount of each of the video slices;
acquiring the video blurred screen duration proportion of each of the video slices, wherein the video blurred screen duration proportion is calculated by adopting a third algorithm and based on a playable duration of an actual download data amount of the video slice and a duration of each of the video slices;
acquiring the video freezing duration proportion of each of the video slices, wherein the video freezing duration proportion is calculated by adopting a fourth algorithm and based on a playable duration of an actual download data amount of each of the video slices and a duration of each of the video slices.

12. The video service quality assessment apparatus of claim 9, wherein the video slice analysis module (43, 53) is further configured to:
use the abnormal handover cell pair as a unit, and cluster the abnormal handover cell pair and other cell whose position information and position information of the abnormal handover cell pair satisfy a preset spatial clustering condition into one cluster; and
for each cluster, in response to determining that other cell exists between a hand-in cell and a hand-out cell in the abnormal handover cell pair, record the hand-in cell as an over-coverage cell, and/or record the other cell existing between the hand-in cell and the hand-out cell as a weak-coverage cell.

13. The video service quality assessment apparatus of claim 12, wherein the video slice analysis module (43, 53) is further configured to: select video slices corresponding to the over-coverage cell and/or the weak-coverage cell; acquire transmission parameters corresponding to the video slices which corresponds to the over-coverage cell and/or the weak-coverage cell; and determine a cause of an abnormality according to the transmission parameters.

## Patentansprüche

1. Verfahren für die Bewertung einer Qualität eines Videoservices, umfassend:
Erfassen (S101) einer Videotransaktion von einem Netzwerk, wobei jede Videotransaktion ein Element von Videodaten eines Videos umfasst;
als Reaktion darauf, dass eine Videotransaktion, die gegenwärtig in einer Transaktionswarteschlange in einem Transaktionspuffer-Pool vorhanden ist, mit der erfassten Videotransaktion verknüpft ist, Verknüpfen und Synthetisieren (S102) von Videodaten der erfassten Videotransaktion und Videodaten der Videotransaktion in der Transaktionswarteschlange, um verknüpfte und synthetisierte Videodaten zu erhalten; und
In-Scheiben-Schneiden (S103) der verknüpften und synthetisierten Videodaten, um Videoscheiben zu erhalten, und Vornehmen (S103) einer Videoservice-Qualitätsanalyse basierend auf den Videoscheiben;
**dadurch gekennzeichnet, dass** das Vornehmen (S103) der Videoservice-Qualitätsanalyse basierend auf den Videoscheiben umfasst: Erfassen eines Benutzerwahrnehmung-Indexwerts von jeder der Videoscheiben, wobei der Benutzerwahrnehmung-Indexwert basierend auf einem Ansichtserfahrung-Indexwert und einem Interaktive-Erfahrung-Indexwert von jeder der Videoscheiben berechnet wird; der Interaktive-Erfahrung-Indexwert basierend auf einem Interaktive-Videoreaktion-Indexwert von jeder der Videoscheiben berechnet wird, der Interaktive-Videoreaktion-Indexwert zum Widerspiegeln einer Interaktive-Videoschalt-Reaktionsgeschwindigkeit verwendet wird; und der Ansichtserfahrung-Indexwert basierend auf einem Übertragungsqualität-Indexwert und einem Videoinhaltsqualität-Indexwert von jeder der Videoscheiben berechnet wird, der Videoinhaltqualität-Indexwert basierend auf mindestens einem von einer Videoquellcoderate, einer Videoauflösung oder einer Videorahmenrate berechnet wird, und der Übertragungsqualität-Indexwert basierend auf einem Verschwommener-Videobildschirm-Häufigkeitswert und einem Verschwommener-Videobildschirm-Daueranteil berechnet wird oder basierend auf einem Videoeinfrierung-Häufigkeitswert und einen Videoeinfrierung-Daueranteil berechnet wird; und
als Reaktion darauf, dass eine Differenz zwischen Benutzerwahrnehmung-Indexwerten von zwei benachbarten Videoscheiben größer als ein voreingestellter Benutzerwahrnehmung-Indexwert-Differenzschwellenwert ist, eine Differenz zwischen Videoinhaltsqualität-Indexwerten der zwei benachbarten Videoscheiben innerhalb eines voreingestellten Qualitätsindexwert-Differenzbereichs liegt, Zellen, die den zwei benachbarten Videoscheiben entsprechen, sich unterscheiden, und eine Differenz zwischen Übertragungsqualität-Indexwerten der zwei benachbarten Videoscheiben größer als ein voreingestellter Übertragungsdifferenz-Schwellenwert ist, Aufzeichnen von Zellen, die den zwei benachbarten Videoscheiben entsprechen, als ein abnormales Handover-Zellenpaar.

2. Verfahren für die Bewertung einer Qualität eines Videoservices nach Anspruch 1, wobei das Verknüpfen und Synthetisieren von Videodaten von Videotransaktionen, die eine voreingestellte Verknüpfungsbedingung erfüllen, umfasst:
als Reaktion darauf, dass keine Videotransaktion, die gegenwärtig in einer Transaktionswarteschlange in dem Transaktionspuffer-Pool vorhanden ist, mit der erfassten Videotransaktion verknüpft ist, Speichern der erfassten Videotransaktion in dem Transaktionspuffer-Pool als eine neue Transaktionswarteschlange.

3. Verfahren für die Bewertung einer Qualität eines Videoservices nach Anspruch 1, wobei die Videotransaktion ferner ein Schlüsselfeld des Elements von Videodaten umfasst; und
wobei, dass die Videotransaktion, die gegenwärtig in der Transaktionswarteschlange in dem Transaktionspuffer-Pool vorhanden ist, mit der erfassten Videotransaktion verknüpft ist, umfasst:
ein Schlüsselfeld von mindestens einer Videotransaktion in der Transaktionswarteschlange stimmt mit einem Schlüsselfeld der erfassten Videotransaktion überein, und ein Absolutwert einer Zeitdifferenz zwischen der Startzeit der Videodaten der erfassten Videotransaktion und der gegenwärtigen Abspielzeit der Transaktionswarteschlange ist kürzer als ein Videoabspielalterungszeit-Schwellenwert;
wobei die gegenwärtige Abspielzeit der Transaktionswarteschlange eine maximale Startzeit von Startzeit von Videodaten sämtlicher Videotransaktionen in der Transaktionswarteschlange ist, wobei das Schlüsselfeld mindestens eines von Benutzeridentitätsinformationen oder Videoabgleichinformationen umfasst.

4. Verfahren für die Bewertung einer Qualität eines Videoservices nach Anspruch 3, wobei die Videoabgleichinformationen mindestens eines von einer Videoendgerätadresse, einer Serveradresse, einem Serverport, einer Videoanwendung, Host-Informationen, einem Abspieldateinamen oder einer eindeutigen Videokennung umfassen.

5. Verfahren für die Bewertung einer Qualität eines Videoservices nach einem der Ansprüche 1 bis 4, wobei das Vornehmen (S103) der Videoservice-Qualitätsanalyse basierend auf den Videoscheiben ferner mindestens eines von Folgendem umfasst:
Erfassen des Interaktive-Videoreaktion-Indexwerts von jeder der Videoscheiben, wobei der Interaktive-Videoreaktion-Indexwert basierend auf einer Datenmenge, die zur ersten Bildschirmanzeige des Videos erforderlich ist, und einer Download-Rate von jeder der Videoscheiben berechnet wird;
Erfassen des Verschwommener-Videobildschirm-Häufigkeitswerts von jeder der Videoscheiben, wobei der Verschwommener-Videobildschirm-Häufigkeitswert durch Anwenden eines ersten Algorithmus und basierend auf einer Datenmenge, die zum normalen Abspielen des Videos erforderlich ist, und einer tatsächlichen Download-Datenmenge von jeder der Videoscheiben berechnet wird;
Erfassen des Videoeinfrierung-Häufigkeitswerts von jeder der Videoscheiben, wobei der Videoeinfrierung-Häufigkeitswert durch Anwenden eines zweiten Algorithmus und basierend auf einer Datenmenge, die zum normalen Abspielen des Videos erforderlich ist, und einer tatsächlichen Download-Datenmenge von jeder der Videoscheiben berechnet wird;
Erfassen des Verschwommener-Videobildschirm-Daueranteils von jeder der Videoscheiben, wobei der Verschwommener-Videobildschirm-Daueranteil durch Anwenden eines dritten Algorithmus und basierend auf einer abspielbaren Dauer einer tatsächlichen Download-Datenmenge von jeder der Videoscheiben und einer Dauer von jeder der Videoscheiben berechnet wird; oder
Erfassen des Videoeinfrierung-Daueranteils von jeder der Videoscheiben, wobei der Videoeinfrierung-Daueranteil durch Anwenden eines vierten Algorithmus und basierend auf einer abspielbaren Dauer einer tatsächlichen Download-Datenmenge von jeder der Videoscheiben und einer Dauer von jeder der Videoscheiben berechnet wird.

6. Verfahren für die Bewertung einer Qualität eines Videoservices nach Anspruch 1, wobei das Vornehmen (S103) der Videoservice-Qualitätsanalyse basierend auf den Videoscheiben ferner umfasst:
Verwenden des abnormalen Handover-Zellenpaars als eine Einheit und Clustern des abnormalen Handover-Zellenpaars und anderer Zellen, deren Positionsinformationen und Positionsinformationen des abnormalen Handover-Zellenpaars eine voreingestellte räumliche Clustering-Bedingung erfüllen, in einen Cluster; und
für jeden Cluster, als Reaktion auf das Bestimmen, dass eine andere Zelle zwischen einer Hand-in-Zelle und einer Hand-out-Zelle in dem abnormalen Handover-Zellenpaar vorhanden ist, Aufzeichnen der Hand-in-Zelle als eine Überabdeckungszelle und/oder Aufzeichnen der anderen Zelle, die zwischen der Hand-in-Zelle und der Hand-out-Zelle vorhanden ist, als eine Zelle mit schwacher Abdeckung.

7. Verfahren für die Bewertung einer Qualität eines Videoservices nach Anspruch 6, wobei das Vornehmen (S103) der Videoservice-Qualitätsanalyse basierend auf den Videoscheiben ferner umfasst:
Auswählen von Videoscheiben, die der Überabdeckungszelle und/oder der Zelle mit schwacher Abdeckung entsprechen;
Erfassen von Übertragungsparametern, die den Videoscheiben entsprechen, die der Überabdeckungszelle und/oder der Zelle mit schwacher Abdeckung entsprechen; und
Bestimmen einer Ursache einer Anomalie gemäß den Übertragungsparametern.

8. Verfahren für die Bewertung einer Qualität eines Videoservices nach einem der Ansprüche 1 bis 4, wobei die Videodaten Live-Videodaten und/oder Video-on-Demand-Daten umfassen.

9. Vorrichtung für die Bewertung einer Qualität eines Videoservices, umfassend:
ein Videodaten-Sammlungsmodul (41, 51), das dazu ausgestaltet ist, eine Videotransaktion von einem Netzwerk zu erfassen, wobei jede Videotransaktion ein Element von Videodaten eines Videos umfasst;
ein Videodaten-Verknüpfungs-und-Synthetisierungsmodul (42, 52), das ausgestaltet ist zum: als Reaktion darauf, dass eine Videotransaktion, die gegenwärtig in einer Transaktionswarteschlange in einem Transaktionspuffer-Pool vorhanden ist, mit der Videotransaktion verknüpft ist, die von dem Videodaten-Sammlungsmodul erfasst wird, Verknüpfen und Synthetisieren von Videodaten der erfassten Videotransaktion und Videodaten der Videotransaktion in der Transaktionswarteschlange, um verknüpfte und synthetisierte Videodaten zu erhalten; und
ein Videoscheiben-Analysemodul (43, 53), das dazu ausgestaltet ist, die verknüpften und synthetisierten Videodaten in Scheiben zu schneiden, um Videoscheiben zu erhalten, und eine Videoservice-Qualitätsanalyse basierend auf den Videoscheiben vorzunehmen; ¨
**dadurch gekennzeichnet, dass** das Videoscheiben-Analysemodul (43, 53) ausgestaltet ist zum:
Erfassen eines Benutzerwahrnehmung-Indexwerts von jeder der Videoscheiben, wobei der Benutzerwahrnehmung-Indexwert basierend auf einem Ansichtserfahrung-Indexwert und einem Interaktive-Erfahrung-Indexwert von jeder der Videoscheiben berechnet wird; der Interaktive-Erfahrung-Indexwert basierend auf einem Interaktive-Videoreaktion-Indexwert von jeder der Videoscheiben berechnet wird, der Interaktive-Videoreaktion-Indexwert zum Widerspiegeln einer Interaktive-Videoschaltreaktionsgeschwindigkeit verwendet wird; und der Ansichtserfahrung-Indexwert basierend auf einem Übertragungsqualität-Indexwert und einem Videoinhaltsqualität-Indexwert von jeder der Videoscheiben berechnet wird, der Videoinhaltsqualität-Indexwert basierend auf mindestens einem von einer Videoquellcoderate, einer Videoauflösung oder einer Videorahmenrate berechnet wird und der Übertragungsqualität-Indexwert basierend auf einem Verschwommener-Videobildschirm-Häufigkeitswert und einem Verschwommener-Videobildschirm-Daueranteil berechnet wird oder basierend auf einem Videoeinfrierung-Häufigkeitswert und einem Videoeinfrierung-Daueranteil berechnet wird; und
als Reaktion darauf, dass eine Differenz zwischen Benutzerwahrnehmung-Indexwerten von zwei benachbarten Videoscheiben größer als ein voreingestellter Benutzerwahrnehmung-Indexwert-Differenzschwellenwert ist, eine Differenz zwischen Videoinhaltsqualität-Indexwerten der zwei benachbarten Videoscheiben innerhalb eines voreingestellten Qualitätsindexwert-Differenzbereichs liegt, Zellen, die den zwei benachbarten Videoscheiben entsprechen, sich voneinander unterscheiden, und eine Differenz zwischen Übertragungsqualität-Indexwerten der zwei benachbarten Videoscheiben größer als ein voreingestellter Übertragungsdifferenz-Schwellenwert ist, Aufzeichnen von Zellen, die den zwei benachbarten Videoscheiben entsprechen, als ein abnormales Handover-Zellenpaar.

10. Vorrichtung für die Bewertung einer Qualität eines Videoservices nach Anspruch 9, wobei das Videodatenverknüpfungs- und Synthetisierungsmodul (42, 52) ferner ausgestaltet ist zum: als Reaktion darauf, dass keine Videotransaktion, die gegenwärtig in einer Transaktionswarteschlange im Transaktionspuffer-Pool vorhanden ist, mit der erfassten Videotransaktion verknüpft ist, Speichern der erfassten Videotransaktion im Transaktionspuffer-Pool als eine neue Transaktionswarteschlange.

11. Vorrichtung für die Bewertung einer Qualität eines Videoservices nach Anspruch 9 oder 10, wobei das Videoscheiben-Analysemodul (43, 53) dazu ausgestaltet ist, mindestens eine der folgenden Videoservice-Qualitätsanalysen basierend auf den Videoscheiben durchzuführen:
Erfassen des Interaktive-Videoreaktion-Indexwerts von jeder der Videoscheiben, wobei der Interaktive-Videoreaktion-Indexwert basierend auf einer Datenmenge, die zur ersten Bildschirmanzeige des Videos erforderlich ist, und einer Download-Rate von jeder der Videoscheiben berechnet wird;
Erfassen des Verschwommener-Videobildschirm-Häufigkeitswerts von jeder der Videoscheiben, wobei der Verschwommener-Videobildschirm-Häufigkeitswert durch Anwenden eines ersten Algorithmus und basierend auf einer Datenmenge, die zum normalen Abspielen des Videos erforderlich ist, und einer tatsächlichen Download-Datenmenge von jeder der Videoscheiben berechnet wird;
Erfassen des Videoeinfrierung-Häufigkeitswerts von jeder der Videoscheiben, wobei der Videoeinfrierung-Häufigkeitswert durch Anwenden eines zweiten Algorithmus und basierend auf einer Datenmenge, die zum normalen Abspielen des Videos erforderlich ist, und einer tatsächlichen Download-Datenmenge von jeder der Videoscheiben berechnet wird;
Erfassen des Verschwommener-Videobildschirm-Daueranteils von jeder der Videoscheiben, wobei der Verschwommener-Videobildschirm-Daueranteil durch Anwenden eines dritten Algorithmus und basierend auf einer abspielbaren Dauer einer tatsächlichen Download-Datenmenge der Videoscheibe und einer Dauer von jeder der Videoscheiben berechnet wird;
Erfassen des Videoeinfrierung-Daueranteils von jeder der Videoscheiben, wobei der Videoeinfrierung-Daueranteil durch Anwenden eines vierten Algorithmus und basierend auf einer abspielbaren Dauer einer tatsächlichen Download-Datenmenge von jeder der Videoscheiben und einer Dauer von jeder der Videoscheiben berechnet wird.

12. Vorrichtung für die Bewertung einer Qualität eines Videoservices nach Anspruch 9, wobei das Videoscheiben-Analysemodul (43, 53) ferner ausgestaltet ist zum:
Verwenden des abnormalen Handover-Zellenpaars als eine Einheit und Clustern des abnormalen Handover-Zellenpaars und anderer Zellen, deren Positionsinformationen und Positionsinformationen des abnormalen Handover-Zellenpaars eine voreingestellte räumliche Clustering-Bedingung erfüllen, in einen Cluster; und
für jeden Cluster, als Reaktion auf das Bestimmen, dass eine andere Zelle zwischen einer Hand-in-Zelle und einer Hand-out-Zelle in dem abnormalen Handover-Zellenpaar vorhanden ist, Aufzeichnen der Hand-in-Zelle als eine Überabdeckungszelle und/oder Aufzeichnen der anderen Zelle, die zwischen der Hand-in-Zelle und der Hand-out-Zelle vorhanden ist, als eine Zelle mit schwacher Abdeckung.

13. Vorrichtung für die Bewertung einer Qualität eines Videoservices nach Anspruch 12, wobei das Videoscheiben-Analysemodul (43, 53) ferner ausgestaltet ist zum: Auswählen von Videoscheiben, die der Überabdeckungszelle und/oder der Zelle mit schwacher Abdeckung entsprechen; Erfassen von Übertragungsparametern, die den Videoscheiben entsprechen, die der Überabdeckungszelle und/oder der Zelle mit schwacher Abdeckung entsprechen; und Bestimmen einer Ursache einer Anomalie gemäß den Übertragungsparametern.

## Revendications

1. Méthode d'évaluation de la qualité d'un service vidéo, comprenant
acquérir (S101) une transaction vidéo à partir d'un réseau, chaque transaction vidéo comprenant un élément de données vidéo d'une vidéo ;
en réponse à une transaction vidéo existant actuellement dans une file d'attente de transactions dans un pool de tampons de transactions et associée à la transaction vidéo acquise, associer et synthétiser (S102) les données vidéo de la transaction vidéo acquise et les données vidéo de la transaction vidéo dans la file d'attente de transactions afin d'obtenir des données vidéo associées et synthétisées ; et
découper (S103) les données vidéo associées et synthétisées pour obtenir des tranches vidéo, et réaliser (S103) une analyse de la qualité du service vidéo basée sur les tranches vidéo ;
**caractérisé en ce que** réaliser (S103) l'analyse de la qualité du service vidéo sur la base des tranches vidéo comprend : l'acquisition d'une valeur d'indice de perception de l'utilisateur pour chacune des tranches vidéo, la valeur d'indice de perception de l'utilisateur étant calculée sur la base d'une valeur d'indice d'expérience de visionnage et d'une valeur d'indice d'expérience interactive pour chacune des tranches vidéo ; la valeur d'indice d'expérience interactive est calculée sur la base d'une valeur d'indice de réponse interactive vidéo de chacune des tranches vidéo, la valeur d'indice de réponse interactive vidéo est utilisée pour refléter une vitesse de réponse interactive de commutation vidéo ; et la valeur d'indice d'expérience de visualisation est calculée sur la base d'une valeur d'indice de qualité de transmission et d'une valeur d'indice de qualité de contenu vidéo de chacune des tranches vidéo, la valeur d'indice de qualité de contenu vidéo est calculée sur la base d'au moins l'un des éléments suivants : un taux de code source vidéo, une résolution vidéo ou un taux de trame vidéo, et la valeur de l'indice de qualité de transmission est calculée sur la base d'une valeur de fréquence d'écran flou vidéo et d'une proportion de durée d'écran flou vidéo ou est calculée sur la base d'une valeur de fréquence de gel vidéo et d'une proportion de durée de gel vidéo ; et
en réponse à une différence entre les valeurs de l'indice de perception de l'utilisateur de deux tranches vidéo adjacentes supérieure à un seuil prédéfini de différence de valeur de l'indice de perception de l'utilisateur, une différence entre les valeurs de l'indice de qualité du contenu vidéo des deux tranches vidéo adjacentes se situant dans une plage de différence de valeur d'indice de qualité prédéfinie, les cellules correspondant aux deux tranches vidéo adjacentes étant différentes, et une différence entre les valeurs de l'indice de qualité de transmission des deux tranches vidéo adjacentes étant supérieure à un seuil de différence de transmission prédéfini, enregistrement des cellules correspondant aux deux tranches vidéo adjacentes en tant que paire de cellules de transfert anormal.

2. La méthode d'évaluation de la qualité du service vidéo de la revendication 1, dans laquelle associer et synthétiser des données vidéo des transactions vidéo satisfaisant à une condition d'association prédéfinie comprennent :
en réponse à l'absence de transaction vidéo existant actuellement dans une file d'attente de transactions dans le pool de tampons de transactions et associée à la transaction vidéo acquise, stocker la vidéo acquise dans le pool de tampons de transactions en tant que nouvelle file d'attente de transactions.

3. La méthode d'évaluation de la qualité du service vidéo de la revendication 1, dans laquelle la transaction vidéo comprend en outre un champ clé de l'élément de données vidéo ; et
dans lequel la transaction vidéo existant actuellement dans la file d'attente de transactions dans le pool de tampons de transactions est associée à la transaction vidéo acquise comprend :
un champ clé d'au moins une transaction vidéo dans la file d'attente de transactions correspondant à un champ clé de la transaction vidéo acquise, et une valeur absolue d'une différence de temps entre l'heure de début des données vidéo de la transaction vidéo acquise et le temps de lecture actuel de la file d'attente de transactions étant inférieure à un seuil de temps de vieillissement de la lecture vidéo ;
dans lequel l'heure de lecture actuelle de la file d'attente des transactions est l'heure maximale des heures de démarrage des données vidéo de toutes les transactions vidéo dans la file d'attente, le champ clé comprenant au moins l'une d'une information d'identité d'utilisateur et d'une information de concordance des vidéos.

4. La méthode d'évaluation de la qualité du service vidéo de la revendication 3, dans laquelle l'information de correspondance vidéo comprend au moins une adresse de terminal vidéo, une adresse de serveur, un port de serveur, une application vidéo, des informations d'hôte, un nom de fichier de lecture ou un identifiant vidéo unique.

5. La méthode d'évaluation de la qualité du service vidéo de l'une des revendications 1 à 4, dans laquelle analyser (S103) la qualité du service vidéo basée sur les tranches vidéo comprend en outre au moins l'un des éléments suivants :
acquérir la valeur de l'indice de réponse interactive vidéo de chacune des tranches vidéo, la valeur de l'indice de réponse interactive vidéo étant calculée sur la base d'une quantité de données requise pour un premier écran l'affichage de la vidéo et le taux de téléchargement de chacune des tranches de vidéo ;
acquérir la valeur de fréquence d'écran flou de chacune des tranches vidéo, la valeur de fréquence d'écran flou étant calculée en adoptant un premier algorithme et sur la base d'une quantité de données requise pour la lecture normale de la vidéo et d'une quantité réelle de données téléchargées de chacune des tranches vidéo les tranches de vidéo ;
acquérir la valeur de fréquence de gel vidéo de chacune des tranches vidéo, la valeur de fréquence de gel vidéo étant calculée par l'adoption d'un second algorithme et sur la base d'une quantité de données requise pour la lecture normale de la vidéo et d'une quantité de données de téléchargement réelle de chacune des vidéos tranches ;
acquérir la proportion de durée d'écran vidéo flou de chacune des tranches vidéo, la proportion de durée d'écran vidéo flou étant calculée en adoptant un troisième algorithme et sur la base d'une durée de lecture d'une quantité réelle de données de téléchargement de chacune des tranches vidéo et d'une durée de chacune des tranches vidéo ; ou
acquérir la proportion de durée de gel vidéo de chacune des tranches vidéo, la proportion de durée de gel vidéo étant calculée en adoptant un quatrième algorithme et sur la base d'une durée de lecture d'une quantité réelle de données de téléchargement de chacune des tranches vidéo et d'une durée de chacune des tranches vidéo.

6. Méthode d'évaluation de la qualité d'un service vidéo selon la revendication 1, dans laquelle réaliser (S103) l'analyse de la qualité de service vidéo basée sur les tranches vidéo comprend en outre :
utiliser la paire de cellules de transfert anormales comme unité, et regrouper la paire de cellules de transfert anormales et une autre cellule dont les informations de position et les informations de position de la paire de cellules de transfert anormales satisfont à une condition de regroupement spatial prédéfinie en une seule grappe ; et
pour chaque grappe, en réponse à la détermination de l'existence d'une autre cellule entre une cellule d'entrée et une cellule de sortie dans la paire de cellules de transfert anormal, enregistrer la cellule d'entrée comme une cellule de surcouverture, et/ou enregistrer l'autre cellule existant entre la cellule d'entrée et la cellule de sortie comme une cellule de couverture faible.

7. La méthode d'évaluation de la qualité du service vidéo de la revendication 6, dans laquelle analyser (S103) la qualité du service vidéo basée sur les tranches vidéo comprend en outre :
sélectionner les tranches vidéo correspondant à la cellule de surcouverture et/ou à la cellule de couverture faible ;
acquérir des paramètres de transmission correspondant aux tranches vidéo qui correspondent à la cellule de surcouverture et/ou à la cellule de couverture faible ; et
déterminer la cause d'une anomalie en fonction des paramètres de transmission.

8. Méthode d'évaluation de la qualité d'un service vidéo selon l'une des revendications 1 à 4, dans laquelle les données vidéo comprennent des données vidéo en direct et/ou des données vidéo à la demande.

9. Appareil d'évaluation de la qualité d'un service vidéo, comprenant
un module de collecte de données vidéo (41, 51), configuré pour acquérir une transaction vidéo à partir d'un réseau, chaque transaction vidéo comprenant un élément de données vidéo d'une vidéo ;
un module d'association et de synthèse de données vidéo (42, 52), configuré pour : en réponse à une transaction vidéo existant actuellement dans une file d'attente de transactions dans un pool de tampons de transactions et associée à la transaction vidéo acquise par le module de collecte de données vidéo, associer et synthétiser des données vidéo des données vidéo de la transaction vidéo acquise et des données vidéo de la transaction vidéo dans la file d'attente des transactions pour obtenir des données vidéo associées et synthétisées ; et
un module d'analyse de tranches vidéo (43, 53), configuré pour découper les données vidéo associées et synthétisées afin d'obtenir des tranches vidéo, et pour effectuer une analyse de la qualité du service vidéo sur la base des tranches vidéo ;
**caractérisé par le fait que** le module d'analyse des coupes vidéo (43, 53) est configuré pour :
acquérir une valeur d'indice de perception de l'utilisateur pour chacune des tranches vidéo, la valeur d'indice de perception de l'utilisateur étant calculée sur la base d'une valeur d'indice d'expérience de visionnage et d'une valeur d'indice d'expérience interactive pour chacune des tranches vidéo, la valeur d'indice d'expérience interactive est calculée sur la base d'une valeur d'indice de réponse interactive vidéo de chacune des tranches vidéo, la valeur d'indice de réponse interactive vidéo est utilisée pour refléter une vitesse de réponse interactive de commutation vidéo ; et la valeur d'indice d'expérience de visualisation est calculée sur la base d'une valeur d'indice de qualité de transmission et d'une valeur d'indice de qualité de contenu vidéo de chacune des tranches vidéo, la valeur d'indice de qualité de contenu vidéo est calculée sur la base d'au moins l'un des éléments suivants : un taux de code source vidéo, une résolution vidéo ou un taux de trame vidéo, et la valeur de l'indice de qualité de transmission est calculée sur la base d'une valeur de fréquence d'écran flou vidéo et d'une proportion de durée d'écran flou vidéo ou est calculée sur la base d'une valeur de fréquence de gel vidéo et d'une proportion de durée de gel vidéo; et
en réponse à une différence entre les valeurs de l'indice de perception de l'utilisateur de deux tranches vidéo adjacentes supérieure à un seuil prédéfini de différence de valeur de l'indice de perception de l'utilisateur, une différence entre les valeurs de l'indice de qualité du contenu vidéo des deux tranches vidéo adjacentes se situant à l'intérieur d'un seuil de qualité prédéfini, les cellules correspondant aux deux tranches vidéo adjacentes étant différentes, et la différence entre les valeurs d'indice de qualité de transmission des deux tranches vidéo adjacentes est supérieure à un seuil de différence de transmission prédéfini, enregistrer les cellules correspondant aux deux tranches vidéo adjacentes comme une paire de cellules de transfert anormal.

10. L'appareil d'évaluation de la qualité du service vidéo de la revendication 9, dans lequel le module d'association et de synthèse des données vidéo (42, 52) est en outre configuré pour : en réponse à l'absence de transaction vidéo existant actuellement dans une file d'attente de transactions dans le pool de tampons de transactions associée à la transaction vidéo acquise, stocker la transaction vidéo acquise dans le pool de tampons de transactions en tant que nouvelle file d'attente de transactions.

11. L'appareil d'évaluation de la qualité du service vidéo de la revendication 9 ou 10, dans lequel le module d'analyse des tranches vidéo (43, 53) est configuré pour effectuer au moins l'une des analyses de la qualité du service vidéo suivantes sur la base des tranches vidéo :
acquérir la valeur de l'indice de réponse interactive vidéo de chacune des tranches vidéo, la valeur de l'indice de réponse interactive vidéo étant calculée sur la base d'une quantité de données requise pour un premier affichage sur écran de la vidéo et le taux de téléchargement de chacune des tranches de vidéo ;
acquérir la valeur de fréquence de l'écran vidéo flou de chacune des tranches vidéo, la valeur de fréquence de l'écran vidéo flou étant calculée en adoptant un premier algorithme et sur la base d'une quantité de données requise pour la lecture normale de la vidéo et d'une quantité réelle de données téléchargées de chacune des tranches vidéo ;
acquérir la valeur de fréquence de gel vidéo de chacune des tranches vidéo, la valeur de fréquence de gel vidéo étant calculée en adoptant un deuxième algorithme et sur la base d'une quantité de données requise pour la lecture normale de la vidéo et d'une quantité de données de téléchargement réelle de chacune des tranches vidéo ;
l'acquisition de la proportion de la durée de l'écran flou vidéo de chacune des tranches vidéo, dans laquelle la proportion de la durée de l'écran flou vidéo de chacune des tranches vidéo est calculée en adoptant un troisième algorithme et en se basant sur la durée de lecture d'une quantité réelle de données de téléchargement de la tranche vidéo et sur la durée de chacune des tranches vidéo ;
acquérir la proportion de durée de gel vidéo de chacune des tranches vidéo, la proportion de durée de gel vidéo étant calculée par l'adoption d'un quatrième algorithme et sur la base d'une durée de lecture d'une quantité réelle de données de téléchargement de chacune des tranches vidéo et sur la durée de chacune des tranches vidéo.

12. L'appareil d'évaluation de la qualité du service vidéo de la revendication 9, dans lequel le module d'analyse des tranches vidéo (43, 53) est en outre configuré pour :
utiliser la paire de cellules de transfert anormales comme unité et regrouper la paire de cellules de transfert anormales et une autre cellule dont les informations de position et les informations de position de la paire de cellules de transfert anormales satisfont à une condition de regroupement spatial prédéfinie en une seule grappe ; et
pour chaque groupe, en réponse à la détermination qu'une autre cellule existe entre une cellule d'arrivée et une cellule de départ dans la paire de cellules de transfert anormal, enregistrer la cellule d'arrivée comme une cellule de surcouverture, et/ou enregistrer l'autre cellule existant entre la cellule d'entrée et la cellule de sortie comme une cellule à couverture faible.

13. L'appareil d'évaluation de la qualité du service vidéo de la revendication 12, dans lequel le module d'analyse des tranches vidéo (43, 53) est en outre configuré pour : sélectionner des tranches vidéo correspondant à la cellule de surcouverture et/ou à la cellule à couverture faible ; acquérir des paramètres de transmission correspondant à la tranche vidéo tranches correspondant à la cellule de surcouverture et/ou à la cellule de faible couverture ; et déterminer la cause d'une anomalie en fonction des paramètres de transmission.
